**Europäisches Patentamt**

**European Patent Office**

**Office européen des brevets**

(19)

(11) Veröffentlichungsnummer : **0 415 004 B1**

(12) **EUROPÄISCHE PATENTSCHRIFT**

(45) Veröffentlichungstag der Patentschrift :
**07.10.92 Patentblatt 92/41**

(51) Int. Cl.$^5$ : **G01C 19/72**

(21) Anmeldenummer : **90109794.9**

(22) Anmeldetag : **23.05.90**

(54) **Faserkreisel.**

(30) Priorität : **30.08.89 DE 3928715**

(43) Veröffentlichungstag der Anmeldung :
**06.03.91 Patentblatt 91/10**

(45) Bekanntmachung des Hinweises auf die
Patenterteilung :
**07.10.92 Patentblatt 92/41**

(84) Benannte Vertragsstaaten :
**DE FR GB IT**

(56) Entgegenhaltungen :
**US-A- 4 440 498**
**US-A- 4 653 917**

(73) Patentinhaber : **Messerschmitt-Bölkow-Blohm**
**Gesellschaft mit beschränkter Haftung**
**Robert-Koch-Strasse**
**W-8012 Ottobrunn (DE)**

(72) Erfinder : **Poisel, Hans, Dr.**
**Neustädter Strasse 6**
**W-8060 Dachau (DE)**
Erfinder : **Trommer, Gert, Dr.**
**Connollystrasse 16**
**W-8000 München 40 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Faserkreisel vom Sagnac-Typ mit einer Lichtleitfaserspule sowie einem aus drei optisch gekoppelten Lichtleitern aufgebauten 3x3-Koppler, wobei ein erster Lichtleiter des 3x3-Kopplers an einem Ende mit einer ersten optischen Strahlungsquelle, deren Strahlungsintensität direkt von einem Strahlungsdetektor erfaßt wird, und die beiden anderen Lichtleiter des 3x3-Kopplers an einem Ende mit je einem Ende der Lichtleitfaserspule und an anderem Ende mit je einem Strahlungsdetektor verbunden sind.

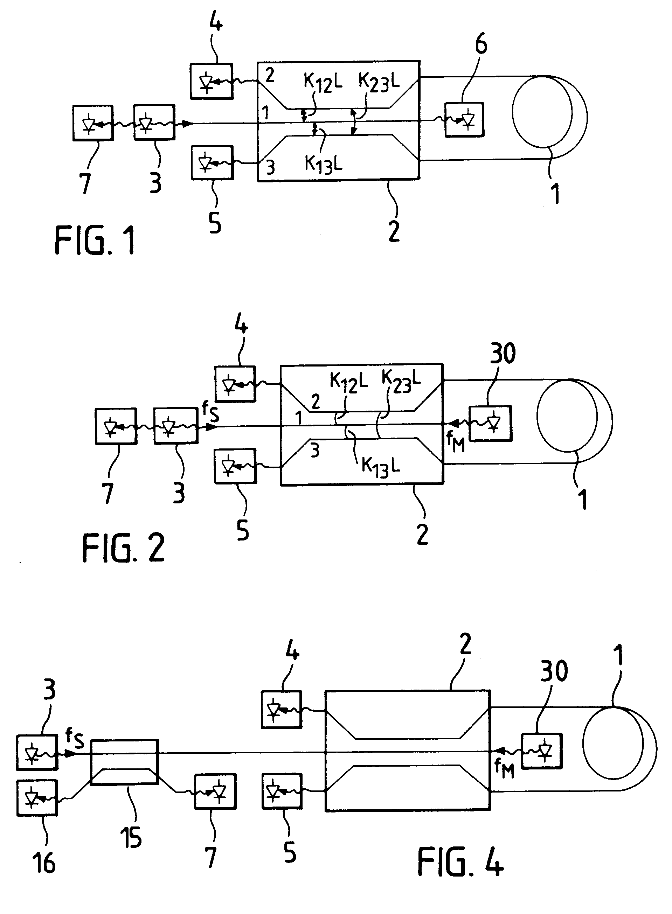

Aus der US 4 440 498 ist ein Faserkreisel bekannt, der von der Verwendung eines 3x3-Kopplers im sogenannten Quadraturpunkt betrieben werden kann. Weiterhin ist aus der Anmeldung EP-A-0329996 (Veröffentlichungs datum: 30.08.89, Stand der Technik im Sinne von Art. 54 (3) EPÜ) ein Faserkreisel bekannt, bei dem mit Hilfe einer sogenannten Monitordiode Fluktuationen der Strahlungsquelle sowie der Kopplereigenschaften erfaßt werden können (siehe Fig. 1). Bei der Signalauswertung mit den Dioden 4 und 5 können mit Hilfe zweier Monitordioden 6 und 7 an der Strahlungsquelle 3 bzw. am Mittelkanal 1 des 3x3-Kopplers 2 sowohl Fluktuationen der Strahlungsleistung der Lichtquelle 3 detektiert werden als auch Fluktuationen der Koppellänge des 3x3-Kopplers, welche z.B. durch thermische Ausdehnung des Kopplers bedingt sind. Damit können jedoch lediglich die gemeinsame Variation der drei Koppellängen zwischen den drei Wellenleitern im Innern des 3x3-Kopplers erfaßt werden, d.h. $\Delta(K_{12}L) = K_{12}\Delta L$, $\Delta(K_{13}L) = K_{13}\Delta L$ und $\Delta(K_{23}L) = K_{23}\Delta L$ ($K_{ij}$ = Koppelfaktor zwischen den Lichtleitern i und j, L = Koppellänge). Änderungen in der angestrebten Symmetrie der Koppelfaktoren $K_{13} \cong K_{23} \cong K_{12}$ durch Umwelteinflüsse wie z.B. Druck, Beschleunigung oder Temperatur können jedoch nicht berücksichtigt werden.

Es ist daher Aufgabe der Erfindung, auch Abweichungen der drei Koppelfaktoren $\Delta K_{ij}$ (i, j =1, 2, 3) zu erfassen, um damit die dadurch bedingten Meßfehler der Drehrate kompensieren zu können.

Die Lösung dieser Aufgabe gelingt durch einen nach den Merkmalen des Patentanspruchs 1 ausgebildeten Faserkreisel.

Die Erfindung geht von der Erkenntnis aus, daß sowohl Änderungen der Koppellänge L als auch der Koppelfaktoren $K_{ij}$ durch eine zusätzliche Monitorlichtquelle, welche mit dem Mittelkanal des 3x3-Kopplers verbunden ist, erfaßt werden können. Hierbei wird die Monitorlichtquelle mit einer anderen Frequenz $f_M$ moduliert als die der eigentlichen Strahungsquelle. Die in den für die Signalauswertung vorgesehenen Strahlungsdetektoren ankommende Überlagerung der Lichtsignale der Sagnac-Interferenzen, die von-der Kombination Hauptstrahlungsquelle/3x3-Koppler/Faserspule und von der Kombination Monitorlichtquelle/3x3-Koppler herrührt, wird mit Hilfe von sogenannten Lock-in-Verfahren aufgrund ihrer unterschiedlichen Modulationsfrequenzen wieder separiert. Der Auswertung dieser Signale liegt der Gedanke zugrunde, daß unterschiedliche Variationen z.B. in den Koppelkonstanten $\Delta K_{12}$ und $\Delta K_{13}$, die auf eine Unsymmetrie der Koppelverhältnisse hinweisen, entsprechend unterschiedliche Ausgangssignale der beiden Strahlungsdetektoren (4, 5 in Fig. 2) mit der Modulationsfrequenz $f_M$ der Monitorstrahlungsquelle bewirken. Gemeinsame Änderungen aller Koppellängen L oder Koppelkonstanten $K_{ij}$ werden sowohl durch die Kombination zweier Monitordioden (7 und 16) entsprechend der Anmeldung EP-A-0329996 als auch durch die in diesem Fall gleichgroße Änderung der $f_M$-Signale der Strahlungsdetektoren (4, 5) erfaßt.

Die Erfindung wird im folgenden anhand der in den Figuren 2, 3 und 4 beschriebenen Ausführungsbeispiele erläutert. Es zeigen:

Fig. 1 einen Faserkreisel gemäß der älteren Anmeldung P 38 05 904.5,

Fig. 2 einen Faserkreisel mit Monitorlichtquelle,

Fig. 3 ein Blockschaltbild zur Auswertung der Signale eines Faserkreisels gemäß Fig. 2 und

Fig. 4 einen Faserkreisel mit einer Monitorlichtquelle und zwei Monitordioden.

Bei dem in Fig. 2 dargestellten Ausführungsbeispiel ist gemäß Patentanspruch 1 der Mittelkanal 1 eines 3x3-Kopplers 2 zum einen mit der Hauptstrahlungsquelle 3 und zum anderen mit einer Monitorlichtquelle 30 verbunden. Die Hauptstrahlungsquelle 3 wird mit der sogenannten Sendefrequenz $f_S$ moduliert, die Monitordiode mit einer davon unterschiedlichen Frequenz $f_M$. Die Strahlungsintensität der Hauptstrahlungsquelle 3 wird direkt von einer Monitordiode 7 erfaßt. Die mit den Kanälen 2 und 3 des 3x3-Kopplers 2 verbundenen Strahlungsdetektoren 4 und 5 erfassen zum einen die Interferenzsignale aus den gegenläufig durch die Lichtleitfaserspule 1 laufenden Lichtsignale sowie die durch Kopplung aus dem Mittelkanal übertretenden Signale der Monitorlichtquelle 30.

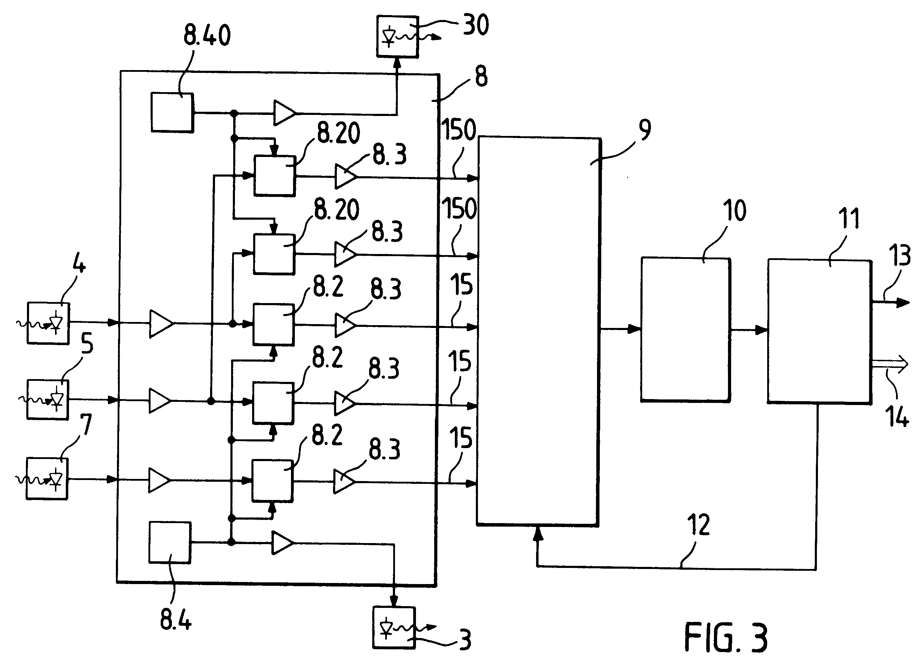

Die Signalauswertung der in den Strahlungsdetektoren 4, 5 und 7 erzeugten Signale geschieht mittels der in Fig. 3 dargestellten Elektronik, bei der die Strahlungsdetektoren 4, 5 und 7 mit einem System 8 von soganannten Lock-in-Verstärkern verbunden sind. Dort werden die einzelnen Signale über Vorverstärker 8.1 verstärkt und von Demodulatoren 8.2 phasenrichtig demoduliert. Ein Oszillator 8.4 liefert dabei die Referenzfrequenz $f_S$ für die Modulation der Hauptstrahlungsquelle 3 sowie für die Demodulatoren 8.2.

Von den verstärkten Signalen der Strahlungsdetektoren 4 und 5 werden vor den Demodulatoren 8.2 Signale abgezweigt und weiteren Demodulatoren 8.20 zugeführt, die ihre Referenzfrequenz aus einem Oszillator 8.40 beziehen, der auch die Monitorlichtquelle 30 moduliert. Die so entstehenden Monitorsignale 150 sind damit von den Signalen 15, die auf der Basis der Sendefrequenz $f_S$ entstanden sind, getrennt.

Die mit einem nicht dargestellten Tiefpaß gefilterten Signale sämtlicher Demodulatoren 8.2 und 8.20 werden in weiteren Verstärkern 8.3 auf einen entsprechenden Pegel angehoben und der Impedanz eines nachfolgenden Analogmultiplexers 9 angepaßt. Dieser multiplext die Ausgangssignale im Zeitbereich, gesteuert durch die Taktfrequenz 12 eines Mikroprozessors 11. Die so entstehenden Zeitmultiplex-Signale werden in einem Analog-Digital-Wandler 10 in digitale Signale umgewandelt, welche vom einem Rechner 11 weiterverarbeitet werden.

Der Kreiselrechner 11 ermittelt die Sagnac-Phase $\Phi_S$ aus den Interferenzsignalen $S_4$ und $S_5$ der Strahlungsdetektoren 4 und 5 gemäß

$$S_4 = V \cdot [A + k \cdot B \cdot \cos (\Phi_S + C)] \cdot J$$
$$S_5 = V \cdot [A + k \cdot B \cdot \cos (\Phi_S - C)] \cdot J$$

A, B, C sind Größen, die im wesentlichen die Koppelkoeffizienten enthalten. Der exakte Zusammenhang ist in "Fiberoptic gyroscope with [3x3] directional coupler", S.K. Sheen, Appl. Phys. Lett 37, 869-871 (1981), (zitiert in US 4 440 498) beschrieben.
V = Konversionsfaktor der Strahlungsdetektoren
J = Intensität der Lichtquelle.

Änderungen der Koppelkoeffizienten, wie sie durch Monitorsignale 150 erkennbar sind, gehen also unmittelbar in die obigen Koeffizienten A, B, C ein.

Die ermittelte Sagnac-Phase bzw. die daraus abgeleitete Drehrate wird über einen seriellen Ausgang 13 bzw. parallelen Ausgang 14 abgegeben, wobei eventuell zusätzliche Informationen über die Lichtleistung und den Zustand des Kopplers mit enthalten sind.

Monitordioden können im allgemeinen in Sendedioden integriert sein; ist dies nicht der Fall, so läßt sich dies durch Anbringen eines 2x2-Kopplers 15 kompensieren. Wie in Fig. 4 gezeigt, ist die Monitordiode 7 am spulenseitigen Ausgang des Kopplers 15 angebracht und erfüllt die gleiche Aufgabe wie in Fig. 2.

Ein zusätzlich angebrachter Strahlungsdetektor 16 liefert ein Signal, das
- zum einen im mit $f_S$ variierenden Anteil die Sagnacphase enthält (damit kann z.B. die Redundanz des Faserkreisels erhöht werden),
- zum anderen eine Bestimmung der im Koppler auftretenden Zusatzdämpfung erlaubt durch Auswertung des mit $f_M$ variierenden Anteils.

**Patentansprüche**

1. Faserkreisel vom Sagnac-Typ mit einer Lichtleitfaserspule (1) sowie einem aus drei optisch gekoppelten Lichtleitern aufgebauten 3x3-Koppler (2), wobei ein erster Lichtleiter des 3x3-Kopplers an einem Ende mit einer ersten optischen Strahlungsquelle (3), deren Strahlungsintensität direkt von einem Strahlungsdetektor (7) erfaßt wird, und die beiden anderen Lichtleiter des 3x3-Kopplers an einem Ende mit je einem Ende der Lichtleitfaserspule und an anderem Ende mit je einem Strahlungsdetektor (4, 5) verbunden sind, **dadurch gekennzeichnet,** daß der erste Lichtleiter (1) des 3x3-Kopplers (2) mit einer zweiten optischen Strahlungsquelle (30) verbunden ist, die erste Strahlungsquelle (3) mit einer ersten Frequenz ($f_S$) und die zweite Strahlunsquelle (30) mit einer sich von der ersten Frenquenz ($f_S$) unterscheidenden Frequenz ($f_M$) moduliert sind.

2. Faserkreisel nach Anspruch 1, **dadurch gekennzeichnet,** daß die erste Strahlungsquelle (3) direkt und/oder indirekt mit mindestens einem weiteren Strahlungsdetektor (16) verbunden ist.

3. Faserkreisel nach Anspruch 1 oder 2, **dadurch gekennzeichnet,** daß die Strahlungsdetektoren (4, 5, 7, 16) mit einem System (8) von Lock-in-Verstärkern verbunden sind, in welchem die von der ersten Strahlungsquelle (3) herrührenden Interferenzsignale von den Signalen, die durch die Aufspaltung des von der zweiten Strahlungsquelle (30) in den Lichtleiter (1) rückseitig eingekoppelten Lichts herrühren, getrennt werden.

**Claims**

1: Fibre gyro of the Sagnac type having an optical fibre-glass coil (1) as well as a 3x3-coupler (2) composed of three optically coupled fibres, whereby a first optical fibre of the 3x3-coupler is connected at the one end to a first optical radiation source (3), the radiation intensity of which is detected directly by a radiation detector (7), and the two other optical fibres of the 3x3-coupler are connected at the one end to a respective end of the optical fibre-glass coil and at the other end to a respective radiation detector (4, 5), **characterised in that** the first optical fibre (1) of the 3x3-coupler (2) is connected to a second optical radiation source (3∅), the first radiation source (3) is modulated by a first frequency ($f_s$), and the second radiation source (3∅) by a frequency ($f_M$) which differs from the first frequency ($f_s$).

2: Fibre gyro according to claim 1, **characterised in that** the first radiation source (3) is directly and/or indirectly connected to at least one additional radiation detector (16).

3: Fibre gyro according to claim 1 or 2, **characterised in that** the radiation detectors (4, 5, 7, 16) are connected to a system (8) of lock-in amplifiers, in which the interference signals originating from a first radiation source (3) are separated from the signals which originate from splitting the light which has been coupled in the rear by the second radiation source (3Ø).

## Revendications

1. Gyromètre à fibre optique de type Sagnac comprenant une bobine de fibre optique (1) ainsi qu'un coupleur 3x3 (2) composé de trois fibres optiques couplées optiquement, une première fibre optique du coupleur 3x3 étant reliée à une extrémité à une première source de rayonnement optique (3) dont l'intensité de rayonnement est captée directement par un détecteur de rayonnement (7) et les deux autres fibres optiques du coupleur 3x3 étant reliées à une extrémité à chacune des extrémités de la bobine de fibre optique et à l'autre extrémité à un détecteur de rayonnement (4, 5), caractérisé en ce que la première fibre optique (1) du coupleur 3x3 (2) est reliée à une deuxième source de rayonnement optique (30), la première source de rayonnement (3) est modulée avec une première fréquence ($f_s$) et la deuxième source de rayonnement (30) avec une fréquence ($f_M$) différente de la première fréquence ($f_s$).

2. Gyromètre à fibre optique selon la revendication 1, caractérisé en ce que la première source de rayonnement (3) est reliée directement et/ou indirectement à au moins un autre détecteur de rayonnement (16).

3. Gyromètre à fibre optique selon la revendication 1 ou 2, caractérisé en ce que les détecteurs de rayonnement (4, 5, 7, 16) sont reliés à un système (8) d'amplificateurs de blocage dans lequel les signaux d'interférence provenant de la première source de rayonnement (3) sont séparés des signaux qui proviennent de la division de la lumière introduite à l'arrière dans la fibre optique (1) par la source de rayonnement (30).

FIG. 1

FIG. 2

FIG. 4

FIG. 3

EP 0 415 004 B1